# EUROPÄISCHE PATENTSCHRIFT

(11) **EP 2 363 237 B1**
(45) Veröffentlichungstag und Bekanntmachung des Hinweises auf die Patenterteilung: **08.01.2014**
(21) Anmeldenummer: 11155934.0
(22) Anmeldetag: 25.02.2011
(51) Int. Cl.: B23Q 11/00

(54) **Staubsaugvorrichtung für eine Bohrmaschine**
Dust suction device for drilling machine
Dispositif d'aspiration de copeaux pour perceuse

(30) Priorität: 04.03.2010 DE 102010010113
(43) Veröffentlichungstag der Anmeldung: 07.09.2011
(73) Patentinhaber: AEG Electric Tools GmbH, 71364 Winnenden (DE)
(72) Erfinder: Lerch, Oliver, 76831 Billigheim-Ingenheim (DE); Vögele, Roland, 71364 Winnenden (DE)
(74) Vertreter: BRP Renaud & Partner

(56) Entgegenhaltungen:
- EP-A1- 1 281 486
- EP-A1- 1 623 793
- EP-A2- 0 434 295
- EP-A2- 2 080 467
- DE-A1- 2 925 908
- DE-A1- 3 202 737
- DE-U1-202006 017 578
- GB-A- 2 441 224

## Beschreibung

Die vorliegende Erfindung betrifft eine Staubsaugvorrichtung zum lösbaren Befestigen an einer handgeführten Bohrmaschine gemäß dem Oberbegriff des Anspruchs 1 (siehe z.B. DE 2925908).

Der Begriff Bohrmaschine umfasst hierbei sowohl einfache Bohrmaschinen als auch Schlagbohrmaschinen sowie Bohrhämmer. Bevorzugt sind elektrische Bohrmaschinen, die an ein Stromnetz anschließbar sind oder auch autark betrieben werden können, also eine eigene Stromversorgung, z.B. in Form einer Batterie oder eines Akkus, aufweisen.

Aus der DE 10 2006 029 624 A1 ist eine nicht autarke Staubsaugvorrichtung zum lösbaren Befestigen an einer handgeführten Bohrmaschine bekannt. Die Bohrmaschine ist hierzu mit zwei Ventilatoren ausgestattet, von denen der erste zur Kühlung des Motors der Bohrmaschine dient, während der zweite den Unterdruck für die Staubabsaugung erzeugt. Eine derartige Staubsaugvorrichtung funktioniert nur zusammen mit der speziell dafür adaptierten Bohrmaschine.

Eine weitere, nicht autarke Staubsaugvorrichtung dieser Art ist aus der DE 10 2007 036 783 A1 bekannt.

Aus der DE 27 41 536 A1 ist ebenfalls eine nicht autarke Staubsaugvorrichtung bekannt, die mit Hilfe einer Befestigungseinrichtung lösbar an einem Spannhals der Bohrmaschine befestigbar ist. Sie enthält in einem Handgriff einen Elektromotor und ein Sauggebläse. Zur Energieversorgung ist die Staubsaugvorrichtung an die Energieversorgung der Bohrmaschine angeschlossen.

Aus der EP 0 434 295 A2 ist nun eine autarke Staubsaugvorrichtung bekannt, die mit Hilfe einer Befestigungseinrichtung lösbar an einem Spannhals der Bohrmaschine befestigbar ist. Bohrstaub wird dabei durch das Gebläse hindurch in einen Staubfangbeutel geblasen.

Aus der EP 1 477 272 A1 und aus der US 7,017,680 B2 ist jeweils eine akkubetriebene Bohrmaschine bekannt, bei der anstelle des Akkusatzes eine Staubsaugvorrichtung angebaut werden kann, wobei dann der Akkusatz an die Staubsaugvorrichtung angebracht wird. Somit versorgt der Akkusatz sowohl die Staubsaugvorrichtung als auch die Bohrmaschine mit elektrischer Energie. Ferner ist an ein Gehäuse der Staubsaugvorrichtung ein Staubsammelbehälter angebaut, in dem ein Staubfilter angeordnet ist.

Aus der EP 0 470 046 B1 sowie aus der US 6,851,898 B2 sind weitere, nicht autarke Staubsaugvorrichtungen bekannt, die ein Gebläse sowie ein Staubfilter aufweisen. Zum Antreiben des Gebläses ist eine Kopplung mit dem Elektromotor der Bohrmaschine vorgesehen.

Weitere nicht autarke Staubsaugvorrichtungen sind aus der DE 103 42 507 A1 und aus der US 7,281,886 B2 bekannt. Sie enthalten in einem Gehäuse jeweils einen Elektromotor und ein Sauggebläse. Das Gehäuse ist mittels einer Befestigungseinrichtung am Spannhals der Bohrmaschine befestigbar. Die Stromversorgung des Elektromotors erfolgt über die Stromversorgung der Bohrmaschine.

Aus der DE 10 2004 026 038 B3 und aus der DE 10 2004 025 880 B3 sind modular aufgebaute Staubsaugvorrichtungen bekannt, die ein erstes Modul mit einem Elektromotor und einem Sauggebläse, ein zweites Modul mit einem Staubsammelraum und ein drittes Modul mit einer Befestigungseinrichtung zum lösbaren Befestigen der Staubsaugvorrichtung an einem Spannhals der Bohrmaschine aufweisen. Zur Stromversorgung des Elektromotors kann ein Netzkabel vorgesehen sein. Ferner kann eine elektrische Kopplung mit der Bohrmaschine vorgesehen sein. Alternativ ist zur Realisierung einer autarken Staubsaugvorrichtung die Anbringung von Akkuzellen denkbar.

Eine weitere nicht autarke Staubsaugvorrichtung ist aus der EP 0 426 321 B1 bekannt. Die Staubabsaugung erfolgt dabei mittels eines in der Bohrmaschine zusätzlich vorhandenen Gebläses.

Die vorliegende Erfindung beschäftigt sich mit dem Problem, für eine, insbesondere autarke, Staubsaugvorrichtung eine verbesserte oder zumindest eine andere Ausführungsform anzugeben, die sich insbesondere durch eine einfache Bedienbarkeit auszeichnet. Außerdem ist eine einfache Anbringung an verschiedenen, herkömmlichen Bohrmaschinen angestrebt. Ferner soll sie einen effektiven Staubschutz bieten.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht grundsätzlich auf der allgemeinen Überlegung, die Staubsaugvorrichtung bzw. deren Elektromotor automatisch einzuschalten, wenn ihr Saugkanal gegen ein Hindernis gedrückt wird. Hierdurch ergibt sich eine signifikante Vereinfachung für die Handhabung der Staubsaugvorrichtung bzw. einer damit ausgestatteten Bohrmaschine. Erreicht wird dies durch einen Druckschalter, der hierzu an geeigneter Stelle vorgesehen ist.

Die Erfindung beruht zusätzlich oder alternativ zu vorstehender Überlegung auf dem allgemeinen Gedanken, die Staubsaugvorrichtung mit Hilfe einer geeigneten Befestigungseinrichtung so an der Bohrmaschine zu befestigen, dass sie sich im montierten Zustand seitlich neben der Bohrmaschine befindet. Hierdurch kann die Staubsaugvorrichtung mit unterschiedlich geformten Bohrmaschinen verwendet werden. Beispielsweise lässt sich die Staubsaugvorrichtung ohne störende Wechselwirkung bei einer Bohrmaschine in L-Form ebenso verwenden wie bei einer Bohrmaschine in Pistolenform. Die Befestigung der Staubsaugvorrichtung erfolgt mit Hilfe der Befestigungseinrichtung an einem Spannhals der Bohrmaschine, und zwar bevorzugt ausschließlich an diesem Spannhals. Der Spannhals von Bohrmaschinen ist standardisiert und ist bei vielen unterschiedlichen Modellen mit gleichem Querschnitt vorhanden. In der Folge kann die Staubsaugvorrichtung an vielen verschiedenen Modellen verwendet werden, da einerseits die Befestigungsvorrichtung die Anbindung am Spannhals ermöglicht, wobei andererseits keine weitere Anbindung zwischen Staubsaugvorrichtung und Bohrmaschine vorhanden ist, so dass keine weitere Adaption zwischen Bohrmaschine und Staubsaugvorrichtung erforderlich ist. Besonders vorteilhaft ist bei der erfindungsgemäßen Staubsaugvorrichtung die Verwendung eines Staubfilters, der im Strömungspfad zweckmäßig stromauf eines Sauggebläses der Staubsaugvorrichtung angeordnet ist. Ein derartiger Staubfilter kann das abgesaugte Bohrmehl aus der Saugströmung herausfiltern, zweckmäßig bevor es zum Sauggebläse gelangt. Hierdurch wird zum Einen das Sauggebläse vor einer Beaufschlagung mit Verunreinigungen geschützt. Zum Anderen kann der Staubfilter ohne weiteres so konzipiert werden, dass sich eine hochwertige Filtrationswirkung ergibt, beispielsweise um eine Feinstaubbelastung der Umgebung der Bohrmaschine und somit eine Feinstaubbelastung der mit der Bohrmaschine arbeitenden Person zu reduzieren.

Zweckmäßig kann die Staubsaugvorrichtung autark ausgestaltet sein, indem sie mit einer eigenen Stromquelle zur Versorgung des Elektromotors mit elektrischer Energie ausgestattet ist.

Gemäß einer vorteilhaften Ausführungsform kann die Staubsaugvorrichtung einen Tragrahmen und ein Gehäuse aufweisen. Das Gehäuse enthält einen Elektromotor, ein vom Elektromotor angetriebenes Sauggebläse, einen Staubsammelraum sowie ein Staubfilter. Ferner weist dieses Gehäuse eine Stromquelle zur Versorgung des Elektromotors mit elektrischer Energie sowie einen Lufteinlass und einen Luftauslass auf. Außerdem ist das Gehäuse am Tragrahmen befestigt. Der Tragrahmen nun weist seinerseits die Befestigungseinrichtung auf, mit deren Hilfe der Tragrahmen an einem Spannhals der Bohrmaschine befestigt werden kann. Desweiteren kann am Tragrahmen das, insbesondere geradlinige, Saugrohr axial verstellbar angeordnet sein. Dieses Saugrohr kann sich im montierten Zustand der Staubsaugvorrichtung parallel zur Werkzeugrotationsachse erstrecken. Einlassseitig trägt das Saugrohr einen Saugkanal, der eine Ansaugöffnung aufweist, die im montierten Zustand der Staubsaugvorrichtung koaxial zur Werkzeugrotationsachse angeordnet ist.

Optional kann ein flexibler Schlauch ein Auslassende des Saugrohrs mit dem Lufteinlass des Gehäuses verbinden. Durch die Anbindung des Tragrahmens am Spannhals der Bohrmaschine ergibt sich zwangsläufig eine vorbestimmte Positionierung des Tragrahmens und somit der gesamten Staubsaugvorrichtung relativ zur Werkzeugrotationsachse. Diese Bauweise beruht auf der Erkenntnis, dass die überwiegende Mehrheit der auf dem Markt befindlichen Bohrmaschinen am Spannhals den gleichen Querschnitt besitzen, nämlich einen Kreisquerschnitt mit 43 mm Durchmesser. Da die hier vorgestellte Staubsaugvorrichtung im montierten Zustand ausschließlich über die Befestigungseinrichtung am Spannhals der Bohrmaschine befestigt ist, ergibt sich eine nahezu universelle Einsetzbarkeit der Staubsaugvorrichtung bei einer Vielzahl der am Markt befindlichen Bohrmaschinen, unabhängig vom jeweiligen Hersteller.

Die Untergliederung der Staubsaugvorrichtung in den Tragrahmen einerseits und das Gehäuse andererseits ermöglicht eine besonders zweckmäßige Anpassung der beiden Komponenten an ihre jeweilige Funktion. Beispielsweise kann der Tragrahmen aus Metall, insbesondere aus Leichtmetall hergestellt werden, während das Gehäuse aus Kunststoff hergestellt werden kann. Hierdurch kann einerseits die Tragfunktion und Stabilität des Tragrahmens gewährleistet werden, während andererseits ein preiswertes und leichtes Gehäuse realisierbar ist.

Besonders zweckmäßig ist auch die Verwendung des flexiblen Schlauchs, um das Auslassende des Saugrohrs mit dem Lufteinlass des Gehäuses zu verbinden. Die Flexibilität des Schlauchs ermöglicht eine einfache Anpassung der Verbindung zwischen Saugrohr und Lufteinlass beim Längsverstellen des Saugrohrs. Ferner gestaltet sich dadurch der Aufbau des Gehäuses einfach und kompakt.

Vorteilhaft ist auch die Verwendung eines Staubfilters im Gehäuse, wodurch eine besonders hohe Schmutzabscheidung realisierbar ist.

Durch die Ausstattung des Gehäuses mit der Stromquelle, insbesondere einer Batterie oder ein Akku, arbeitet die Staubsaugvorrichtung autark, so dass diesbezüglich keine Kopplung mit der Bohrmaschine oder mit deren Stromversorgung erforderlich ist. Diese autarke Ausgestaltung unterstützt die universelle Einsetzbarkeit der vorgestellten Staubsaugvorrichtung bei unterschiedlichen Bohrmaschinen.

Entsprechend einer vorteilhaften Ausführungsform kann das Saugrohr ein insbesondere am Tragrahmen angeordnetes, Außenrohr und ein dazu koaxiales, darin teleskopierbares Innenrohr aufweisen, das den Saugkanal trägt. Das Außenrohr ermöglicht dabei die axiale Einstellbarkeit des Saugrohrs, um die Staubsaugvorrichtung an unterschiedliche Längen des jeweils verwendeten Bohrwerkzeugs, wie z. Bsp. ein Bohrer, Bohrmeißel oder Schlagbohrer, anpassen zu können. Im Unterschied dazu ermöglicht das teleskopierbare Innenrohr während des Betriebs der Bohrmaschine eine Anpassung der Saugrohrlänge an die jeweilige Bohrtiefe. Besonders vorteilhaft kann dabei das Innenrohr über eine Druckfeder am Außenrohr abgestützt sein, wobei ein Druckschalter zum Einschalten des Elektromotors in diese gefederte Abstützung integriert sein kann, so dass das Andrücken des Saugkanals gegen ein Hindernis den Druckschalter betätigt und dabei insbesondere das Innenrohr gegen die Rückstellkraft der Druckfeder relativ zum Außenrohr verstellt.

Besonders zweckmäßig ist eine Ausgestaltung, bei welcher das Gehäuse am Tragrahmen lösbar befestigt ist, wobei dann der Schlauch am Saugrohr und/oder am Gehäuse lösbar angebracht ist. Hierdurch ist es insbesondere möglich, am gleichen Tragrahmen unterschiedliche Gehäuse anbringen zu können. Beispielsweise können die Gehäuse, insbesondere im Hinblick auf den Staubsammelraum, für unterschiedliche Einsatzzwecke unterschiedlich gestaltet sein. Beispielsweise fällt beim Bohren in Stein oder Beton deutlich weniger Bohrmehl an, als bspw. beim Bohren von Holz. Typischerweise fallen beim Bohren in Holz sehr voluminöse Späne an, wodurch ein deutlich größerer Staubsammelraum von Vorteil ist.

Von besonderer Bedeutung ist eine Ausführungsform, bei der die Befestigungseinrichtung ein Spannband aufweist, das zum Montieren der Staubsaugvorrichtung an der Bohrmaschine den Spannhals koaxial zur Werkzeugrotationsachse umgreift, wobei die Befestigungseinrichtung eine Spanneinrichtung aufweist, mit der das den Spannhals umgreifende Spannband zum Befestigen des Tragrahmens an der Bohrmaschine spannbar ist. Durch diese Ausgestaltung ist die Befestigungseinrichtung besonders einfach handhabbar.

Entsprechend einer zweckmäßigen Weiterbildung kann die Spanneinrichtung einen zum Spannen des Spannbands manuell betätigbaren Knebel aufweisen, der als Zusatzhandgriff ausgestaltet ist. Der Knebel ermöglicht zum einen die besonders einfache manuelle Betätigung der Spanneinrichtung und somit der Befestigungseinrichtung. Darüber hinaus kann er als Zusatzhandgriff verwendet werden, wodurch er eine Doppelfunktion besitzt, was die Handhabung der mit der Staubsaugvorrichtung ausgerüsteten Bohrmaschine vereinfacht.

Gemäß einer anderen vorteilhaften Ausführungsform kann der Staubsammelraum in einem Sammelbehälter ausgebildet sein, der abnehmbar an einem Gehäuse angebracht ist. Die Verwendung eines derartigen abnehmbaren Sammelbehälters vereinfacht die Handhabung der Staubsaugvorrichtung. Insbesondere lässt sich der Staubsammelraum durch Abnehmen des Sammelbehälters besonders einfach entleeren. Ferner ist es möglich, unterschiedlich große Sammelbehälter für unterschiedliche Einsatzzwecke der Staubsaugvorrichtung bereitzustellen, die dann wahlweise am Gehäuse angebracht werden können. Beispielsweise kann zum Bohren in Holz ein besonders großer Sammelbehälter verwendet werden.

Entsprechend einer speziellen Weiterbildung kann der Staubsammelbehälter bzw. das Gehäuse zumindest im Bereich des Staubsammelraums bzw. im Bereich des Sammelbehälters zumindest teilweise für sichtbares Licht transparent ausgestaltet sein. Hierdurch ist es insbesondere dem Anwender möglich, visuell den Füllstand des Staubsammelraums zu überprüfen.

Zusätzlich oder alternativ kann vorgesehen sein, den Staubsammelbehälter aus einem biegesteifen oder harten Kunststoff herzustellen, der insbesondere so hart bzw. steif ist, dass er sich im Betrieb der Staubsaugvorrichtung durch den sich darin ausbildenden Unterdruck nicht wesentlich verformt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine teilweise geschnittene, perspektivische Ansicht einer Staubsaugvorrichtung im montierten Zustand,
- Fig. 2: eine Ansicht von oben der montierten Staubsaugvorrichtung,
- Fig. 3: eine Ansicht von unten der montierten Staubsaugvorrichtung,
- Fig. 4: eine Ansicht von vorn der montierten Staubsaugvorrichtung.

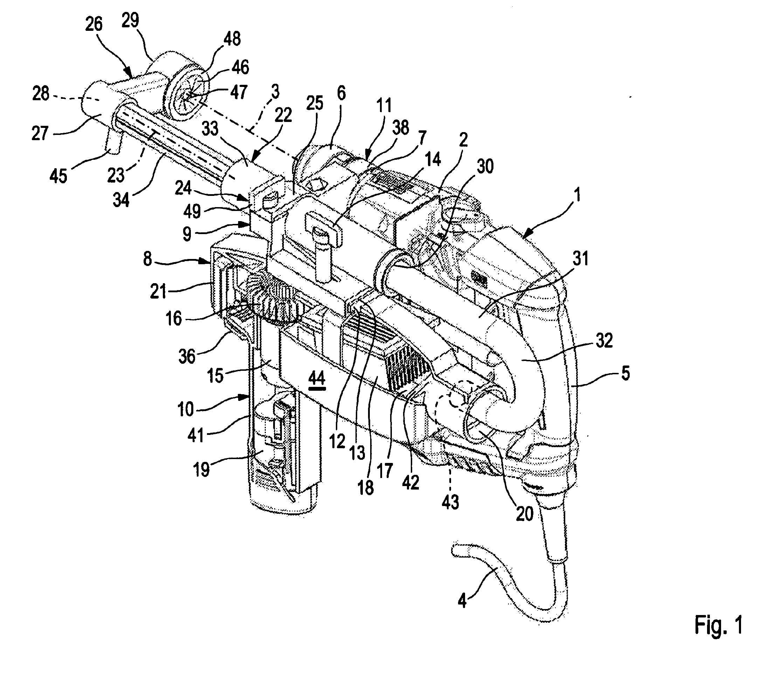

Entsprechend den Fig. 1 bis 4 besitzt eine Bohrmaschine 1, die insbesondere auch als Schlagbohrmaschine oder als Bohrhammer ausgestaltet sein kann, ein Gehäuse 2, in dem eine hier nicht erkennbare Spindel um eine Rotationsachse 3 drehend antreibbar ist. Hierzu enthält die Bohrmaschine 1 einen hier ebenfalls nicht erkennbaren Elektromotor, der über eine Anschlusskabel 4 an ein Stromnetz anschließbar ist. Anstelle eines derartigen Anschlusskabels 4 kann die Bohrmaschine 1 auch mit einem Akku bzw. mit einem Akkusatz ausgestattet sein, wodurch die Bohrmaschine 1 autark ist. Da die Bohrmaschine 1 somit elektrisch betrieben ist, handelt es sich um eine Elektrobohrmaschine bzw. allgemein um ein Elektrowerkzeug bzw. um eine Elektrowerkzeugmaschine.

Ferner weist die Bohrmaschine 1 einen Handgriff 5 auf. Sie lässt sich somit von Hand führen, so dass es sich um eine handgeführte Bohrmaschine 1 handelt.

Insgesamt handelt es sich somit bei der Bohrmaschine 1 um eine Elektrohandbohrmaschine bzw. um ein Elektrohandwerkzeug bzw. um eine Elektrohandwerkzeugmaschine.

Im gezeigten Beispiel besitzt die Bohrmaschine 1 bzw. ihr Gehäuse 2 die sogenannte L-Form, da die Rotationsachse 3 des Werkzeugs im Wesentlichen senkrecht zu einer Rotationsachse eines Rotors des Elektromotors zum Antreiben der Spindel bzw. des Werkzeugs orientiert ist. Im Unterschied dazu ist bei der sogenannten Pistolenform die Rotorachse des Elektromotors im Wesentlichen parallel zur Rotationsachse 3 des Werkzeugs orientiert.

Die Bohrmaschine 1 ist außerdem mit einer Werkzeugaufnahme 6 ausgestattet, die mit Hilfe der Spindel um die Rotationsachse 3 drehend antreibbar ist. Die Werkzeugaufnahme 6 dient zur Aufnahme eines Werkzeugs, insbesondere eines Bohrwerkzeugs, bei dem es sich um einen Bohrer, um einen Schlagbohrer oder um einen Bohrmeißel handeln kann. Bei eingesetztem Werkzeug rotiert das jeweilige Werkzeug um die Rotationsachse 3, die im Folgenden auch als Werkzeugrotationsachse 3 bezeichnet wird. Im Anschluss an die Werkzeugaufnahme 6 besitzt das Gehäuse 2 der Bohrmaschine 1 einen Spannhals 7, der üblicherweise zylindrisch, insbesondere kreiszylindrisch, geformt ist. Bei den meisten auf dem Markt befindlichen Bohrmaschinen 1 besitzt dieser Spannhals 7 einen genormten Querschnitt von bspw. 43 mm. Der Spannhals 7 dient üblicherweise zur Montage eines Zusatzhandgriffs, der hier jedoch nicht dargestellt bzw. weggelassen ist.

Die hier gezeigte Bohrmaschine 1 ist mit einer Staubsaugvorrichtung 8 ausgestattet. Diese Staubsaugvorrichtung 8 bildet eine bezüglich der Bohrmaschine 1 separate Vorrichtung, die an der Bohrmaschine 1 lösbar befestigt werden kann. Dementsprechend ist es möglich, die Bohrmaschine 1 bedarfsabhängig mit der Staubsaugvorrichtung 8 auszurüsten.

Im gezeigten montierten Zustand ist die Staubsaugvorrichtung 8 seitlich neben der Bohrmaschine 1 angeordnet. Bezogen auf die in den Figuren wiedergegebene übliche Gebrauchshaltung der Bohrmaschine 1 ist die Staubsaugvorrichtung 8 links neben der Bohrmaschine 1 angeordnet. Zweckmäßig ist die Staubsaugvorrichtung 8 so konzipiert, dass sie auf gleiche Weise auch rechts neben der Bohrmaschine 1 montiert werden kann. Die Staubsaugvorrichtung 8 befindet sich dabei jeweils vollständig neben der Bohrmaschine 1, abgesehen von einer nachfolgend noch näher erläuterten Befestigungseinrichtung 11, über welche die Staubsaugvorrichtung 8 an der Bohrmaschine 1 befestigt werden kann. Durch die Ausgestaltung der Staubsaugvorrichtung 8 derart, dass sie seitliche neben der Bohrmaschine 1 montiert werden kann, lässt sie sich unabhängig von der Größe der jeweiligen Bohrmaschine 1 sowohl bei Bohrmaschinen 1 mit L-Form als auch bei Bohrmaschinen 1 mit Pistolenform verwenden.

Die Staubsaugvorrichtung 8 umfasst einen Tragrahmen 9 sowie ein teilweise aufgeschnitten dargestelltes Gehäuse 10. Der Tragrahmen 9 ist mit Hilfe der Befestigungseinrichtung 11 am Spannhals 7 der Bohrmaschine 1 befestigbar. In den Figuren ist der Tragrahmen 9 mit der Befestigungseinrichtung 11 am Spannhals 7 befestigt. Bemerkenswert ist, dass die Staubsaugvorrichtung 8 ausschließlich am Spannhals 7 befestigt ist und nur im Bereich des Spannhalses 7 mit der Bohrmaschine 1 im Kontakt steht. Somit kann die Staubsaugvorrichtung 8 wie ein Zusatzhandgriff bzw. anstelle eines Zusatzhandgriffs am Spannhals 7 montiert werden. Durch die üblicherweise normierten Spannhälse 7 ist es dadurch ebenso möglich, die Staubsaugvorrichtung 8 an einer Vielzahl unterschiedlicher üblicher Bohrmaschinen 1 zu montieren. Da außer dem Spannhals 7 kein weiterer Kontakt zwischen der montierten Staubsaugvorrichtung 8 und der Bohrmaschine 1 vorhanden ist, muss auch keine weitere Adaption der Staubsaugvorrichtung 8 an die jeweilige Bohrmaschine 1 erfolgen, was die Verwendung der Staubsaugvorrichtung 8 an unterschiedlichen Bohrmaschinen 1 erheblich vereinfacht.

Das Gehäuse 10 ist am Tragrahmen 9 befestigt. Beispielsweise kann hierzu am Gehäuse 10 integral ein Steckschuh 12 ausgeformt sein, während am Tragrahmen 9 eine dazu komplementäre Schuhaufnahme 13 vorgesehen ist. Der Steckschuh 12 ist insbesondere parallel zur Werkzeugrotationsachse 3 in die Schuhaufnahme 13 einsteckbar. Die Formgebung von Schuh 12 und Aufnahme 13 ist so gewählt, dass der in die Aufnahme 13 eingesteckte Schuh 12 durch Formschluss gehalten ist. Besonders vorteilhaft ist dabei eine Ausführungsform, bei welcher das Gehäuse 10 am Tragrahmen 9 lösbar befestigt ist. Beispielsweise kann eine Sicherungsschraube 14 vorgesehen sein, die mit dem eingesteckten Steckschuh 12 zusammenwirkt, um den Schuh 12 in der Aufnahme 13 zu fixieren. Die Sicherungsschraube 14 kann dabei formschlüssig in den Schuh 12 eingreifen oder kraftschlüssig den eingesteckten Schuh 12 in der Aufnahme 13 verspannen.

Im Gehäuse 10 sind ein Elektromotor 15 und ein Sauggebläse 16 angeordnet. Der Elektromotor 15 treibt das Sauggebläse 16 an. Im Gehäuse 10 ist außerdem ein Staubsammelraum 17 enthalten. Ferner enthält das Gehäuse 10 einen Staubfilter 18. Das Gehäuse 10 weist außerdem einen Stromquelle 19 zur Versorgung des Elektromotors 15 mit elektrischer Energie auf. Die Stromquelle 19 kann als Batterie, vorzugsweise jedoch als Akku bzw. Akkupack ausgestaltet sein. Durch die eigene Stromquelle 19 ist die Staubsaugvorrichtung 8 autark ausgestaltet.

Ferner weist das Gehäuse 10 einen Lufteinlass 20 sowie einen Luftauslass 21 auf, der bspw. durch mehrere radial benachbart zum Sauggebläse 16 angeordnete Schlitze realisiert sein kann. Der Staubfilter 18 ist in einem vom Lufteinlass 20 zum Luftauslass 21 führenden Strömungspfad stromauf des Sauggebläses 16 angeordnet. Auf diese Weise ist das Gebläse 16 vor einer Beaufschlagung mit Schmutzpartikeln geschützt. Dementsprechend befindet sich der Staubsammelraum 17 ebenfalls stromauf des Gebläses 16 und stromauf des Staubfilters 18.

Am Tragrahmen 9 ist ein geradliniges Saugrohr 22 befestigt, und zwar derart, dass es am Tragrahmen 9 axial verstellbar angeordnet ist. Die Axialrichtung des Saugrohrs 22 wird dabei durch seine Längsmittelachse 23 definiert, die sich im montierten Zustand parallel zur Werkzeugsrotationsachse 3 erstreckt. Die axiale Verstellbarkeit des Saugrohrs 22 ermöglicht eine Anpassung der Staubsaugvorrichtung 8 an unterschiedliche Längen der in die Werkzeugaufnahme 6 eingesetzten Werkzeuge. Eine Fixiereinrichtung 24 ermöglicht es, eine eingestellte Relativlage des Saugrohrs 22 bezüglich des Tragrahmens 9 zu fixieren. Beispielsweise kann die Fixiereinrichtung 24 durch einen Bügel 25 gebildet sein, der das Saugrohr 22 übergreift und mit Hilfe einer Spannschraube 49 eine kraftschlüssige Verspannung des Saugrohrs 22 am Tragrahmen 9 ermöglicht.

Distal zum Tragrahmen 9 ist am Saugrohr 22 ein Saugkanal 26 angebracht. Dieser ist einenends bei 27 an einem Einlassende 28 des Saugrohrs 22 angeordnet und mit diesem fluidisch verbunden. Anderenends weist der Saugkanal 26 eine von der Bohrmaschine 1 abgewandte Ansaugöffnung 29 auf. Im montierten Zustand der Staubsaugvorrichtung 8 ist diese Ansaugöffnung 29 koaxial zur Werkzeugrotationsachse 3 angeordnet. Die Ansaugöffnung 29 kann einen kreisförmigen Querschnitt aufweisen.

Das Saugrohr 22 ist an seinem Auslassende 30 mit einem zumindest teilweise flexiblen Schlauch 31 verbunden, der seinerseits mit der Einlassöffnung 20 des Gehäuses 10 verbunden ist. Der Schlauch 31 ist zumindest in einem U-förmig gebogenen Biegeabschnitt 32 flexibel ausgestaltet. Zweckmäßig kann der Schlauch 31 über seine gesamte Länge, also vom Auslassende 30 bis zum Lufteinlass 20 flexibel ausgestaltet sein. Der Schlauch 31 ist am Saugrohr 22 lösbar angebracht. Alternativ kann der Schlauch 31 am Gehäuse 10 lösbar angebracht sein. Ebenso ist es möglich, den Schlauch 31 sowohl am Saugrohr 22 als auch am Gehäuse 10 lösbar anzubringen. In Verbindung mit dem lösbar am Tragrahmen 9 angebrachten Gehäuse 10 ermöglicht der lösbare Schlauch 31 ein einfaches Montieren und Demontieren des Gehäuses 10 am Tragrahmen 9.

Das Saugrohr 22 ist zweckmäßig teleskopierbar ausgestaltet. Hierzu weist es ein am Tragrahmen 9 angeordnetes Außenrohr 33 und ein dazu koaxial angeordnetes Innenrohr 34 auf, das in das Außenrohr 33 eingesteckt ist und darin teleskopierbar ist. Das Innenrohr 34 trägt den Saugkanal 26. Das Außenrohr 33 ist axial verstellbar am Tragrahmen 9 angebracht und ist mit dem Schlauch 31 verbunden. Die Teleskopierbarkeit des Saugrohrs 22 ermöglicht im Betrieb der Bohrmaschine 1 ein automatisches, stufenloses Anpassen der Staubsaugvorrichtung 8 an die fortschreitende Bohrtiefe. Je tiefer das mit Hilfe des Bohrwerkzeugs erzeugte Loch, desto tiefer taucht das Innenrohr 34 in das Außenrohr 33 ein.

Zur staubdichten fluidischen Kopplung des Innenrohrs 34 mit dem Außenrohr 33 kann ein hier nicht dargestellter Wellschlauch vorgesehen sein, der beim Einfahren des Innenrohrs 34 in das Außenrohr 33 ziehharmonikaartig zusammengeschoben wird und beim Ausfahren des Innenrohrs 34 aus dem Außenrohr 33 ziehharmonikaartig auseinandergezogen wird.

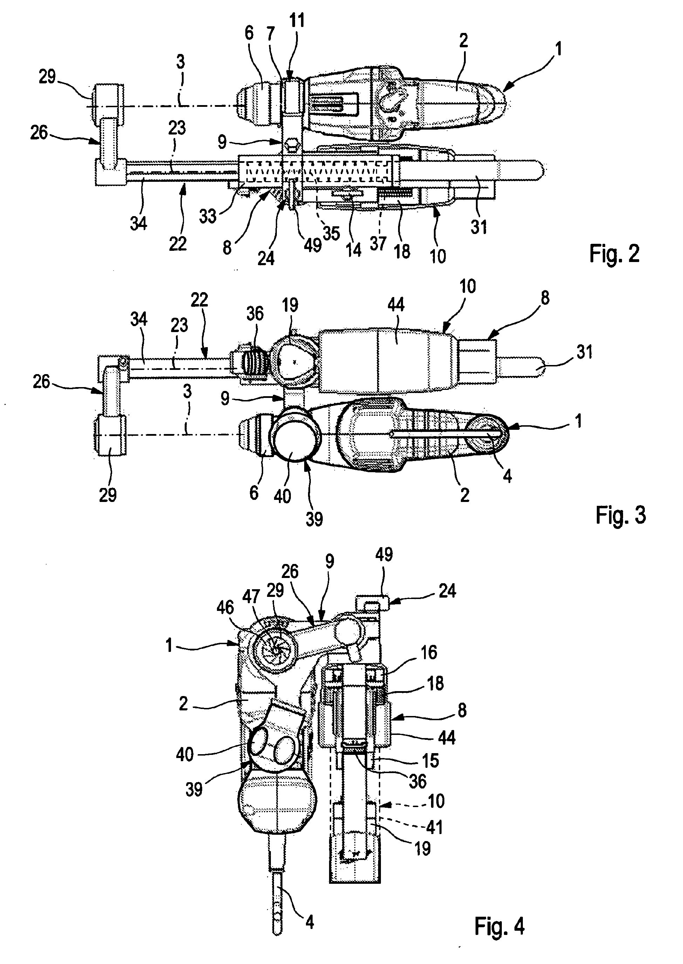

Entsprechend Fig. 2 kann das Innenrohr 34 über eine Druckfeder 35 am Außenrohr 33 axial abgestützt sein. Hierdurch ist das Innenrohr 34 nach außen vorgespannt. Der Saugkanal 26 kommt dadurch im Bereich seiner Ansaugöffnung 29 vorgespannt an dem zu bohrenden Hindernis zur Anlage. Die Druckfeder 35 kann insbesondere in den zuvor genannten Wellschlauch integriert sein.

Zum manuellen Einschalten der Staubsaugvorrichtung 8 kann diese mit einem manuell, z.B. durch Drehen, Drücken oder Schieben, betätigbaren Tastschalter 36 ausgestattet sein, der zweckmäßig am Gehäuse 10 angebracht ist. Zusätzlich oder alternativ kann entsprechend Fig. 2 ein Druckschalter 37 vorgesehen sein, der beim Andrücken des Saugkanals 22 gegen ein Hindernis, das gebohrt werden soll, die Absaugvorrichtung 8 automatisch einschaltet. Die Betätigung des jeweiligen Schalters 36 bzw. 37 führt zu einer Bestromung des Elektromotors 15 und somit zum Einschalten des Gebläses 16. Der Druckschalter 37 ist im Beispiel axial zwischen der Druckfeder 35 und dem Außenrohr 33 angeordnet. Er könnte bspw. auch axial zwischen der Druckfeder 35 und dem Innenrohr 34 angeordnet sein.

Besonders vorteilhaft ist eine Ausführungsform, bei welcher dem Tastschalter 36 genau oder zumindest drei Schaltstellungen zugeordnet sind. In einer ersten Schaltstellung ist das Gebläse 16 ausgeschaltet und der Druckschalter 37 ist deaktiviert, so dass durch eine Betätigung des Druckschalters 37 das Gebläse 16 nicht einschaltbar ist. In einer zweiten Schaltstellung ist der Druckschalter 37 aktiviert, so dass das Gebläse 16 durch Betätigen des Druckschalters 37 einschaltbar und ausschaltbar ist. In einer dritten Schaltstellung ist das Gebläse 16 unabhängig von einer Betätigung des Druckschalters 37 permanent eingeschaltet.

Die Befestigungseinrichtung 11, mit deren Hilfe die Staubsaugvorrichtung 8 an der Bohrmaschine 1 festlegbar ist, weist ein Spannband 38 auf. Dieses Spannband 38 umgreift zum Montieren der Staubsaugvorrichtung 8 an der Bohrmaschine 1 den Spannhals 7 koaxial zur Werkzeugrotationsachse 3. Die Befestigungseinrichtung 11 ist außerdem mit einer Spanneinrichtung 39 ausgestattet, mit deren Hilfe das Spannband 38 gespannt werden kann, wenn es den Spannhals 7 umgreift. Das Spannen des Spannbands 38 führt dann zum Festlegen des Tragrahmens 9 am Spannhals 7 durch Kraftschluss. Diese Spanneinrichtung 39 kann entsprechend den hier gezeigten Ausführungsformen mit einem manuell betätigbaren Knebel 40 ausgestattet sein, mit dessen Hilfe das Spannband 38 gespannt werden kann. Dieser Knebel 40 ist bei den hier gezeigten Ausführungsformen als Zusatzhandgriff ausgestaltet, was besonders deutlich aus Fig. 4 hervorgeht.

Die Befestigungseinrichtung 11 kann für einen bestimmten Querschnitt des Spannhalses 7 ausgelegt sein, z.B. für einen Standard-Kreisquerschnitt mit 43 mm Durchmesser.

Bei der hier gezeigten Ausführungsform ist außerdem das Gehäuse 10 mit einem Gehäuseabschnitt 41 versehen, der als Zusatzhandgriff ausgestaltet ist. Besagter Gehäuseabschnitt 41 enthält den Elektromotor 15 und weist die Stromquelle 19 auf. Die hier vorgestellte Absaugvorrichtung 8 kann somit gemäß einer besonders vorteilhaften Ausführungsform zwei Zusatzhandgriffe, nämlich den Knebel 40 und den Gehäuseabschnitt 41 für die Bohrmaschine 1 bereitstellen, was die Handhabung der Bohrmaschine 1 erheblich erleichtert. Der Gehäuseabschnitt 41 erstreckt sich im Wesentlichen quer zur Längsmittelachse 23 des Saugrohrs 22.

Der Staubfilter 18 kann entsprechend einer vorteilhaften Ausführungsform als Feinstaubfilter ausgestaltet sein. Ein derartiger Feinstaubfilter, der auch als HEPA-Filter (High Efficiency Particulate Absorber) bezeichnet werden kann, zeichnet sich bei den typischerweise beim Bohren anfallenden Partikel durch einen Abscheidegrad von mindestens 99,9% aus. Hierdurch wird nicht nur das Gebläse 16 vor einer Beaufschlagung mit größeren Partikeln geschützt, vielmehr wird auch eine Feinstaubbelastung der Umgebung der Bohrmaschine 1 und somit eine Gesundheitsgefährdung des jeweiligen Monteurs, reduziert. Der Staubfilter 18 kann ein übliches Filtermedium aufweisen, wie z.B. ein Vliesmaterial oder ein Papiermaterial.

Um außerdem eine Beschädigung des Staubfilters 18 durch aufschlagende größere Partikel zu vermeiden, kann es entsprechend einer vorteilhaften Ausführungsform vorgesehen sein, einen in Fig. 1 erkennbaren Impaktor 42 im Gehäuse 10 stromauf des Staubfilters 18 im Strömungspfad anzuordnen. Der Impaktor 42 bildet eine Prallplatte, die im Bereich des Lufteinlasses 20 bzw. stromab eines Austrittsendes 43 des Schlauchs 31 in der Flugbahn der mitgeführten Partikel angeordnet ist. Der Impaktor 42 erzeugt eine starke Strömungsumlenkung der ankommenden Saugströmung, wodurch diese zunächst vom Staubfilter 18 weggelenkt wird. Der Impaktor 42 lenkt die ankommende Strömung in den Staubsammelraum 17 hinein. Die Strömung muss dort dann erneut umgelenkt werden, um durch den Staubfilter 18 zur Saugseite des Gebläses 16 zu kommen. Hierdurch kann ein direkter Beschuss des Staubfilters 18 durch mitgeführte Partikel vermieden werden. Gleichzeitig werden dadurch die in der Saugströmung mitgeführten Partikel stark abgebremst, so dass sie sich im Staubsammelraum 17 einfacher ansammeln können.

Vorzugsweise ist der Staubsammelraum 17 in einem Sammelbehälter 44 ausgebildet. Der Sammelbehälter 44 bildet bezüglich des Gehäuses 10 ein separates Bauteil und ist abnehmbar am Gehäuse 10 angebracht. Durch den abnehmbaren Sammelbehälter 44 kann der Staubsammelraum 17 besonders einfach entleert werden. Des Weiteren ist es möglich, unterschiedliche Sammelbehälter 44 am Gehäuse 10 wahlweise anzubringen. Beispielsweise ist der gezeigte, vergleichsweise kleine Sammelbehälter 44 zum Aufsammeln von Steinmehl geeignet, das beim Bohren von Beton oder Stein anfällt. Falls jedoch mit der Bohrmaschine 1 Holz gebohrt werden soll, ist ein deutlich größerer Staubsammelraum 17 erforderlich, so dass dann ein entsprechend großer Sammelbehälter oder ein Sammelbeutel oder Sammelsack am Gehäuse 10 angebracht werden kann.

Besonders vorteilhaft ist es, den Sammelbehälter 44 aus einem relativ harten und/oder biegesteifen Kunststoff herzustellen, der zweckmäßig so konzipiert ist, dass sich der Sammelbehälter 44 durch den sich im Betrieb der Staubsaugvorrichtung 8 im Staubsammelraum 17 ausbildenden Unterdruck nicht merklich verformt.

Ferner kann es vorteilhaft sein, das Gehäuse 10 zumindest im Bereich des Sammelraums 17 zumindest teilweise für sichtbares Licht transparent auszugestalten. Beispielsweise kann das Gehäuse 10 im Bereich des Staubsammelraums 17 mit einem transparenten Fenster versehen sein. Sofern wie hier ein Sammelbehälter 44 verwendet wird, kann dieser vollständig transparent ausgestaltet sein. Ebenso kann der Sammelbehälter 44 zumindest ein transparentes Fenster enthalten und im Übrigen für sichtbares Licht undurchlässig ausgestaltet sein. Zweckmäßig ist das Gehäuse 10 aus einem Kunststoff hergestellt. Ebenso ist auch der Sammelbehälter 44 zweckmäßig aus Kunststoff hergestellt. Sofern das Gehäuse 10 bzw. der Sammelbehälter 44 transparente und nicht transparente Bereiche aufweist, können auch verschiedene Kunststoffe zum Herstellen des Gehäuses 10 bzw. des Sammelbehälters 44 verwendet werden.

Im Unterschied zum Gehäuse 10 ist der Tragrahmen 9 zweckmäßig aus Metall hergestellt, wobei ein Leichtmetall bevorzugt wird bzw. eine Leichtmetalllegierung. Zweckmäßig eignet sich Aluminium bzw. eine Aluminiumlegierung.

Sofern die Stromquelle 19 wie hier als Akku bzw,. Akkupack ausgestaltet ist, kann sie am Gehäuse 10, hier am griffförmigen Gehäuseabschnitt 41 lösbar angebracht sein. Hierdurch ist es bspw. möglich, die Stromquelle 19 an einem separaten Ladegerät aufzuladen. Ebenso ist dann der abwechselnde Einsatz mehrerer Stromquellen 19 möglich.

Der Saugkanal 26 kann entsprechend einer vorteilhaften Ausführungsform am Saugrohr 22 um die Längsmittelachse 23 des Saugrohrs 22 drehbar angeordnet sein. Zweckmäßig kann eine Fixiereinrichtung 45 vorgesehen sein, mit deren Hilfe die jeweils eingestellte Drehlage zwischen dem Saugkanal 26 und dem Saugrohr 22 fixiert werden kann. Die Fixiereinrichtung 45 kann bspw. eine Stellschraube sein, die durch Verspannen des hülsenförmigen Endes 27 mit dem Saugrohr 22 bzw. mit dessen Innenrohr 34 die gewünschte Drehfixierung mittels Kraftschluss erzeugt.

Der Saugkanal 26 kann an einer von der Ansaugöffnung 29 abgewandten Seite, die in Fig. 1 dem Betrachter zu gewandt ist, eine Blende 46 aufweisen, die eine Blendenöffnung 47 besitzt, die hinsichtlich ihrer Öffnungsweite einstellbar ist. Die Blendenöffnung 47 ist im montierten Zustand der Staubsaugvorrichtung 8 koaxial zur Werkzeugrotationsachse 3 positioniert. Durch die Blendenöffnung 47 dringt das jeweilige Bohrwerkzeug bis zur Ansaugöffnung 29 vor. Durch die einstellbare Blendenöffnung 47 kann der Saugkanal 26 an unterschiedliche Durchmesser der verwendeten Bohrwerkzeuge angepasst werden. Beispielsweise besitzt die Blende 46 einen Einstellring 48, mit dessen Hilfe die Öffnungsweite der Blendenöffnung 47 einstellbar ist. Ein manuelles Drehen des Einstellrings 48 verändert die Öffnungsweite der Blendenöffnung 47.

Im gezeigten Beispiel besitzt der Saugkanal 26 eine vorbestimmte Länge, die auf den Abstand zwischen Werkzeugrotationsachse 3 und Saugrohrlängsmittelachse 23 abgestimmt ist, der sich bei der Montage der Staubsaugvorrichtung 8 an einer Bohrmaschine 1 mit dem Standard-Querschnitt am Spannhals 7, an den die Staubsaugvorrichtung 8 adaptiert ist, einstellt. Um auch andere Querschnitte am Spannhals 7 zu ermöglichen, kann der Saugkanal 28 bei einer anderen Ausführungsform so ausgestaltet sein, dass er eine einstellbare Länge aufweist.

Bei den gezeigten Ausführungsformen ist die Staubsaugvorrichtung 8 so ausgestaltet, dass sie autark betrieben und an der Bohrmaschine 1 so montiert werden kann, dass sie im montierten Zustand bezogen auf eine typische Arbeitshaltung der Bohrmaschine 1 seitlich neben der Bohrmaschine 1 angeordnet ist und abgesehen von der einzigen Kopplung über die Befestigungseinrichtung 11 keine Berührung bzw. keinen Kontakt mit der Bohrmaschine 1 besitzt.

## Patentansprüche

1. Staubsaugvorrichtung zum lösbaren Befestigen an einer handgeführten Bohrmaschine (1),
- mit einem Elektromotor (15),
- mit einem vom Elektromotor (15) angetriebenen Sauggebläse (16),
- mit einem Staubsammelraum (17),
- mit einem im Strömungspfad angeordneten Staubfilter (18),
- mit einem Saugrohr (22),
- mit einem Saugkanal (26), der einenends mit einem Einlassende (28) des Saugrohrs (22) verbunden ist und der anderenends eine Ansaugöffnung (29) aufweist, die im montierten Zustand der Staubsaugvorrichtung (8) koaxial zur Werkzeugrotationsachse (3) angeordnet ist,
**dadurch gekennzeichnet,**
- **dass** ein Druckschalter (37) zum Einschalten des Elektromotors (15) vorgesehen ist,
- **dass** das Saugrohr (22) ein Außenrohr (33) und ein dazu koaxiales, darin teleskopierbares Innenrohr (34) aufweist, das den Saugkanal (26) trägt,
- **dass** das Innenrohr (34) über eine Druckfeder (35) am Außenrohr (33) abgestützt ist,
- **dass** die Druckfeder (35) über den Druckschalter (37) an einem der Rohre (33, 34) abgestützt ist.

2. Staubsaugvorrichtung nach Anspruch 1,
mit einer Befestigungseinrichtung (11) zum lösbaren Befestigen der Staubsaugvorrichtung (8) an einem Spannhals (7) der Bohrmaschine (1), derart, dass sich die Staubsaugvorrichtung (8) im montierten Zustand bei einer üblichen Gebrauchshaltung der Bohrmaschine (1) seitlich neben der Bohrmaschine (1) befindet.

3. Staubsaugvorrichtung nach Anspruch 1 oder 2,
dass die Staubsaugvorrichtung (8) als autarke Staubsaugvorrichtung (8) ausgestaltet ist und mit einer Stromquelle (19) zur Versorgung des Elektromotors (15) mit elektrischer Energie ausgestaltet ist.

4. Staubsaugvorrichtung nach einem der Ansprüche 1 bis 3,
**dadurch gekennzeichnet,**
**dass** der Staubfilter (18) im Strömungspfad stromauf des Sauggebläses (16) angeordnet ist.

5. Staubsaufvorrichtung nach Anspruch 2,
**dadurch gekennzeichnet,**
- **dass** ein Tragrahmen (9) vorgesehen ist, der mittel der Befestigungseinrichtung (11) lösbar am Spannhals (7) der Bohrmaschine (1) befestigbar ist,
- **dass** ein Gehäuse (10) vorgesehen ist, das den Elektromotor (15), das Sauggebläse (16), den Staubsammelraum (17), den Staubfilter (18) und die Stromquelle (19) aufweist und das am Tragrahmen (9) befestigt ist,
- wobei insbesondere vorgesehen sein kann, dass das Gehäuse (10) am Tragrahmen (9) lösbar befestigt ist.

6. Staubsaugvorrichtung nach einem der Ansprüche 1 bis 5,
**dadurch gekennzeichnet,**
- **dass** ein zumindest teilweise flexibler Schlauch (31) vorgesehen ist, der mit einem Auslassende (30) des Saugrohrs (22) verbunden ist, wobei insbesondere vorgesehen sein kann, dass der Schlauch (31) das Auslassende (30) mit einem Lufteinlass (20) des Gehäuses (10) verbindet,
- wobei insbesondere vorgesehen sein kann, dass der Schlauch (31) am Saugrohr (22) und/oder an einem Gehäuse (10) lösbar angebracht ist.

7. Staubsaugvorrichtung nach einem der Ansprüche 1 bis 6,
**dadurch gekennzeichnet,**
- **dass** die Befestigungseinrichtung (11) ein Spannband (38) aufweist, das zum Montieren der Staubsaugvorrichtung (8) an der Bohrmaschine (1) den Spannhals (7) koaxial zur Werkzeugrotationsachse (3) umgreift,
- **dass** die Befestigungseinrichtung (11) eine Spanneinrichtung (39) aufweist, mit der das den Spannhals (7) umgreifende Spannband (38) zum Befestigen des Tragrahmens (9) an der Bohrmaschine (1) spannbar ist,
- wobei insbesondere vorgesehen sein kann, dass die Spanneinrichtung (39) einen zum Spannen des Spannbands (38) manuell betätigbaren Knebel (40) aufweist, der als Zusatzhandgriff ausgestaltet ist.

8. Staubsaugvorrichtung nach Anspruch 5,
**dadurch gekennzeichnet,**
**dass** das Gehäuse (10) einen, insbesondere quer zur Werkzeugrotationsachse (3) verlaufenden, als Zusatzhandgriff ausgestalteten Gehäuseabschnitt (41) aufweist, der den Elektromotor (15) enthält und die Stromquelle (19) aufweist.

9. Staubsaugvorrichtung nach einem der Ansprüche 1 bis 8,
**dadurch gekennzeichnet,**
- **dass** der Staubfilter (18) als Feinstaubfilter ausgestaltet ist, und/oder
- **dass** stromauf des Staubfilters (18) ein Impaktor (42) im Strömungspfad angeordnet ist.

10. Staubsaugvorrichtung nach einem der Ansprüche 1 bis 9,
**dadurch gekennzeichnet,**
**dass** der Staubsammelraum (17) in einem Sammelbehälter (44) ausgebildet ist, der abnehmbar an einem Gehäuse (10) angebracht ist, wobei insbesondere vorgesehen sein kann, dass der Sammelbehälter (44) zumindest teilweise für sichtbares Licht transparent ausgestaltet ist und/oder dass der Sammelbehälter (44) aus einem harten Kunststoff besteht, insbesondere derart, dass er sich durch den Betriebsunterdruck nicht verformt.

11. Staubsaugvorrichtung nach einem der Ansprüche 1 bis 10,
**dadurch gekennzeichnet,**
**dass** ein den Staubsammelraum (17) aufweisendes Gehäuse (10) zumindest im Bereich des Staubsammelraums (17) oder des Sammelbehälters (44) zumindest teilweise für sichtbares Licht transparent ausgestaltet ist.

12. Staubsaugvorrichtung nach einem der Ansprüche 1 bis 11,
**dadurch gekennzeichnet,**
**dass** die Druckfeder (35) in einen Wellschlauch integriert ist, der das Innenrohr (34) mit dem Außenrohr (33) verbindet.

13. Staubsaugvorrichtung nach einem der vorhergehenden Ansprüche,
**dadurch gekennzeichnet,**
**dass** ein Tastschalter (36) zum manuellen Ein- und Ausschalten des Elektromotors (15) vorgesehen ist, der mit dem Druckschalter (37) gekoppelt ist und der zumindest drei Schaltstellungen aufweist, nämlich eine erste Schaltstellung, in welcher der Elektromotor (15) ausgeschaltet ist und der Druckschalter (37) deaktiviert ist, eine zweite Schaltstellung, in welcher der Druckschalter (37) aktiviert ist, so dass der Elektromotor (15) über den Druckschalter (37) ein- und ausschaltbar ist, und eine dritte Schaltstellung, in welcher der Elektromotor (15) unabhängig von der Betätigung des Druckschalters (37) eingeschaltet ist.

14. Staubsaugvorrichtung nach Anspruch 3,
**dadurch gekennzeichnet, dass** die Stromquelle (19) als Akku oder Akkupack ausgestaltet ist, wobei die Stromquelle (19) lösbar am Gehäuse (10) angebracht ist.

## Claims

1. A dust suction device for detachable attachment to a hand-held drilling machine (1),
- having an electric motor (15),
- having a suction fan (16) driven by the electric motor (15),
- having a dust collection chamber (17),
- having a dust filter (18) arranged in the flow path,
- having a suction pipe (22),
- having a suction channel (26), one end of which is connected to an inlet end (28) of the suction pipe (22), and the other end of which has a suction opening (29) that is aligned coaxially with the axis of rotation of the tool (3) when the dust suction device (8) is mounted,
**characterized in that**
- a pressure switch (37) is provided for switching on the electric motor (15),
- the suction pipe (22) has an outer pipe (33) and an inner pipe (34) arranged coaxially therewith and movable telescopically therein that carries the suction channel (26),
- the inner pipe (34) is braced against the outer pipe (33) by a compression spring (35),
- the compression spring (35) is braced against one of the pipes (33, 34) via the pressure switch (37).

2. The dust suction device as recited in claim 1,
having a fastening device (11) for detachably fastening the dust suction device (8) to a clamping neck (7) of the drilling machine (1) in such manner that when mounted the dust suction device (8) is located on the side of the drilling machine (1) when the drilling machine (1) his in a normal working posture.

3. The dust suction device as recited claim 1 or 2,
**characterized in that**
the dust suction device (8) is designed as an autarchic dust suction device (8) and is furnished with a power source (19) for supplying the electric motor (15) with electrical energy.

4. The dust suction device as recited in any of claims 1 to 3,
**characterized in that**
the dust filter (18) is arranged in the flow path upstream of the suction fan (16).

5. The dust suction device as recited in claim 2,
**characterized in that**
- a support frame (9) is provided which is detachably attachable to the clamping neck (7) of the drilling machine (1) via fastening device (11),
- a housing (10) is provided that contains the electric motor (15), the suction fan (16), the dust collection chamber (17), the dust filter (18) and the power source (19), and is attached to the support frame (9),
- wherein it may be provided in particular that the housing (10) is detachably attachable to the support frame (9).

6. The dust suction device as recited in any of claims 1 to 5,
**characterized in that**
- an at least partly flexible tube (31) is provided, one end of which is connected to an outlet end (30) of the suction pipe (22), wherein it may particularly be provided that the tube (31) connects the outlet end (30) to an air inlet (20) of the housing (10),
- wherein it may particularly be provided that the tube (31) is attached detachably to the suction pipe (22) and/or a housing (10).

7. The dust suction device as recited in any of claims 1 to 6,
**characterized in that**
- the fastening device (11) has a band clamp (38) that encircles the clamping neck (7) coaxially with the axis of rotation of the tool (3) for mounting the dust suction device (8) on the drilling machine (1),
- the fastening device (11) has tightening device (39) with which the band clamp (38) encircling the clamping neck (7) can be tightened to secure the support frame (9) on the drilling machine (1),
- wherein it may particularly be provided that the tightening device (39) has a manually operable toggle lever (40) constructed in the form of an additional handle for tightening the band clamp (38).

8. The dust suction device as recited in claim 5,
**characterized in that**
the housing (10) includes a housing section (41) particularly extending perpendicularly to the axis of rotation of the tool (3) and designed in the form of an additional handle (41), and which contains the electric motor (15) and the power source (19).

9. The dust suction device as recited in any of claims 1 to 8,
**characterized in that**
- the dust (18) has the form of a fine dust filter, and/or
- an impactor (42) is arranged in the flow path upstream of the dust filter (18).

10. The dust suction device as recited in any of claims 1 to 9,
**characterized in that**
the dust collection chamber (17) is constructed in a collection container (44) that is attached to a housing (10) so as to be removable, wherein it may be particularly provided that the collection container (44) is designed to be at least partly transparent for visible light and/or that the collection container (44) is made from a hard plastic, particularly such that it is not deformed by underpressure during operation.

11. The dust suction device as recited in any of claims 1 to 10,
**characterized in that**
a housing (10) containing the dust collection chamber (17) is designed such that at least in the area of the dust collection chamber (17) or the collection container (44) at least a part thereof is designed so as to be transparent for visible light.

12. The dust suction device as recited in any of claims 1 to 11,
**characterized in that**
the compression spring (35) is integrated in a corrugated tube that connects the inner pipe (34) to the outer pipe (33).

13. The dust suction device as recited in any of the preceding claims,
**characterized in that**
a button switch (36) is provided for manually switching the electric motor (15) on and off, which button switch is coupled to pressure switch (37) and has at least three switch positions, a first switching position in which electric motor (15) is switched off and pressure switch (37) is deactivated, a second switching position in which pressure switch (37) is activated so that electric motor (15) may be switched on and off via pressure switch (37), and a third switching position in which electric motor (15) is switched on permanently regardless of any operation of the pressure switch (37).

14. The dust suction device as recited in claim 3,
**characterized in that** the power source (19) has the form of a rechargeable battery or rechargeable battery pack, wherein the power source (19) is attached detachably to the housing (10).

## Revendications

1. Dispositif d'aspiration de copeaux à fixer de manière amovible sur une perceuse portative (1),
- comportant un moteur électrique (15),
- comportant une soufflante de copeaux (16) entraînée par le moteur électrique (15),
- comportant un espace d'accumulation de copeaux (17).
- comportant un filtre à copeaux (18) disposé dans le trajet d'écoulement,
- comportant un tuyau d'aspiration (22),
- comportant un canal d'aspiration (26), qui à une extrémité est relié à une extrémité d'admission (28) du tuyau d'aspiration (22) et à l'autre extrémité présente une ouverture d'aspiration (29), qui en l'état monté du dispositif d'aspiration de copeaux (8) est disposée coaxialement à l'axe de rotation d'outil (3),
**caractérisé en ce que**
- un interrupteur à pression (37) est prévu afin de mettre en service le moteur électrique (15),
- le tuyau d'aspiration (22) présente un tuyau extérieur (33) et un tuyau intérieur (34) coaxial à celui-ci et télescopique à l'intérieur de celui-ci, qui supporte le canal d'aspiration (26),
- le tuyau intérieur (34) est appuyé par l'intermédiaire d'un interrupteur à pression (35) sur le tuyau extérieur (33),
- le ressort de pression (35) est appuyé par l'intermédiaire de l'interrupteur à pression (37) sur un des tuyaux (33, 34).

2. Dispositif d'aspiration de copeaux selon la revendication 1, comportant un dispositif de fixation (11) à des fins de fixation amovible du dispositif d'aspiration de copeaux (8) sur un collier de serrage (7) de la perceuse (1), de telle sorte que le dispositif d'aspiration de copeaux (8) en l'état monté lors d'un maintien en utilisation habituel de la perceuse (1) se trouve latéralement près de la perceuse (1).

3. Dispositif d'aspiration de copeaux selon les revendications 1 ou 2, **caractérisé en ce que** le dispositif d'aspiration de copeaux (8) est conçu comme un dispositif d'aspiration de copeaux (8) autarcique et est conçu avec une source d'électricité (19) pour alimenter le moteur électrique (15) en énergie électrique.

4. Dispositif d'aspiration de copeaux selon une des revendications 1 à 3, **caractérisé en ce que** le filtre à copeaux (18) est disposé en amont de la soufflante de copeaux (16) dans le trajet d'écoulement.

5. Dispositif d'aspiration de copeaux selon la revendication 2, **caractérisé en ce que**
- un châssis porteur (9) est prévu, qui peut être fixé au moyen du dispositif de fixation (11) de manière amovible sur le collier de serrage (7) de la perceuse (1),
- un logement (10) est prévu, qui présente le moteur électrique (15), la soufflante de copeaux (16), l'espace d'accumulation de copeaux (17), le filtre à copeaux (18) et la source d'électricité (19) et qui est fixé sur le châssis porteur (9),
- dans lequel il peut notamment être prévu que le logement (10) soit fixé de manière amovible sur le châssis porteur (9).

6. Dispositif d'aspiration de copeaux selon une des revendications 1 à 5, **caractérisé en ce que**
- un flexible (31) au moins partiellement flexible est prévu, qui est relié à une extrémité d'échappement (30) du tuyau d'aspiration (22), dans lequel
- il peut notamment être prévu que le flexible (31) relié l'extrémité d'échappement (30) avec une admission d'air (20) du logement (10),
- dans lequel il peut notamment être prévu que le flexible (31) soit monté de manière amovible sur le tuyau d'aspiration (22) et/ou sur un logement (10).

7. Dispositif d'aspiration de copeaux selon une des revendications 1 à 6, **caractérisé en ce que**
- le dispositif de fixation (11) présente une bande de serrage (38), qui à des fins de montage du dispositif d'aspiration de copeaux (8) sir la perceuse (1) vient en prise autour du collier de serrage (7) par rapport à l'axe de rotation d'outil (3),
- le dispositif de fixation (11) présente un dispositif de serrage (39), avec lequel la bande de serrage (38) venant en prise autour du collier de serrage (7) peut être serrée afin de fixer le châssis porteur (9) sur la perceuse (1),
- dans lequel il peut notamment être prévu que le dispositif de serrage (39) présente une manette (40) actionnable manuellement pour serrer la bande de serrage (38), qui est conçue comme une poignée supplémentaire.

8. Dispositif d'aspiration de copeaux selon la revendication 5, **caractérisé en ce que** le logement (10) présente une portion de logement (41) conçue comme une poignée supplémentaire, s'étendant notamment transversalement à l'axe de rotation d'outil (3), qui contient le moteur électrique (15) et présente la source électrique (19).

9. Dispositif d'aspiration de copeaux selon une des revendications 1 à 8, **caractérisé en ce que**
- le filtre à copeaux (18) est conçu comme un filtre à copeaux fins, et/ou
- en amont du filtre à copeaux (18) un impacteur (42) est disposé dans le trajet d'écoulement.

10. Dispositif d'aspiration de copeaux selon une des revendications 1 à 9, **caractérisé en ce que** l'espace d'accumulation de copeaux (17) est réalisé dans un récipient collecteur (44), qui est monté de manière amovible sur un logement (10), dans lequel il peut notamment être prévu que le récipient collecteur (44) soit conçu de manière au moins partiellement transparente à la lumière visible et/ou que le récipient collecteur (44) soit constitué d'un plastique dur, notamment de sorte qu'il ne se déforme pas sous l'effet de la dépression en fonctionnement.

11. Dispositif d'aspiration de copeaux selon une des revendications 1 à 10, **caractérisé en ce que** un logement (10) présente l'espace d'accumulation de copeaux (17) est conçu de manière au moins partiellement transparente à la lumière visible au niveau de l'espace d'accumulation de copeaux (17) ou du récipient collecteur (44).

12. Dispositif d'aspiration de copeaux selon une des revendications 1 à 11, **caractérisé en ce que** le ressort de pression (35) est intégré dans un flexible ondulé, qui relie le tuyau intérieur (34) au tuyau extérieur (33).

13. Dispositif d'aspiration de copeaux selon une des revendications précédentes, **caractérisé en ce que** un interrupteur à bouton poussoir (36) pour la mise en service et hors service manuelle du moteur électrique (15) est prévu, qui est couplé à l'interrupteur à pression (37) et qui présente au moins trois positions de commutation, à savoir une première position de commutation, dans laquelle le moteur électrique (15) est mise hors service et l'interrupteur à pression (37) est désactivé, une deuxième position de commutation, dans laquelle l'interrupteur à pression (37) est activé, de sorte que le moteur électrique (15) puisse être mis en service et hors service par l'intermédiaire de l'interrupteur à pression (37), et une troisième position de commutation, dans laquelle le moteur électrique (15) est mis en service indépendamment de l'actionnement de l'interrupteur à pression (37).

14. Dispositif d'aspiration de copeaux selon la revendication 3, **caractérisé en ce que** la source d'électricité (19) est conçue comme un accumulateur ou un bloc d'accumulateur, dans lequel la source d'électricité (19) est montée de manière amovible sur le logement (10).
